# EUROPEAN PATENT SPECIFICATION

(11) **EP 2 747 310 B1**
(45) Date of publication and mention of the grant of the patent: **16.05.2018**
(21) Application number: 12306616.9
(22) Date of filing: 19.12.2012
(51) Int. Cl.: H04B 10/40, H04B 10/071

(54) **Optical data transmission device**
Optische Datenübertragungsvorrichtung
Dispositif de transmission de données optiques

(43) Date of publication of application: 25.06.2014
(73) Proprietor: Alcatel Lucent, 91620 Nozay (FR)
(72) Inventor: Hehmann, Joerg, 70435 Stuttgart (DE); Poehlmann, Wolfgang, 70435 Stuttgart (DE)
(74) Representative: Wetzel, Emmanuelle

(56) References cited:
- EP-A1- 1 763 158
- WO-A1-2010/146659
- WO-A1-2012/129320
- US-A1- 2012 243 863

## Description

### Field of the invention

The invention relates to the field of telecommunications, and in particular to an optical transceiver module for an optical line terminal of an optical access network as well as an optical line terminal of an optical access network.

### Background

These days, access networks, also called passive optical networks (PON), are used, for connecting a plurality of customers to a core network of data transportation.

In such an access network, the interconnection between the core network and the access network is given at a so-called central office, which contains an optical line terminal (OLT). The OLT is connected via at least one optical fiber, preferably called optical feeder fiber, to a so-called remote node. At this remote node, an optical downstream signal, transmitted by the OLT at a downstream wavelength, is split onto different optical branches, to which one or more customers are connected by means of optical network units (ONU).

The customers send optical upstream signals, possessing an upstream wavelength, via the optical branches towards the remote node, which then combines these optical upstream signals to a combined upstream signal and transmits the combined upstream signal via the optical feeder fiber to the optical line terminal.

In order to determine the transmission properties of the optical transmission channel, into which a device transmits an optical signal, a measurement technique of optical time domain reflectometry (OTDR) may be applied. In such an OTDR measurement, a reflection profile of the transmission channel may be estimated. Preferably, the technique of OTDR is carried out at the OLT.

For the purpose of OTDR, a measurement signal in the form of an optical pulse may be transmitted into the optical channel. The received response signal, which is reflected by the optical channel, may then be traced in the time domain for determining the reflection profile.

In a more advanced technique of OTDR measurement, the measurement signal may be an optical signal carrying a correlation sequence. The received response signal, reflected by the optical channel, is then recorded and used for determining the reflection profile. The reflection profile may be determined, by correlating a sampled version of the received response signal with the initial correlation sequence itself. In the case, that the auto-correlation function of the correlation sequence is equal to or approximated by the dirac delta function, the result of the correlation yields an estimate of the impulse response of the optical channel in the time domain, which in turn is an approximation of the reflection profile.

When transmitting an optical downstream signal carrying transmission data into the optical channel using a transmission device, it is one possibility to carry out the technique of OTDR using a further measurement device, which is separate from the transmission device, for generating the optical measurement signal as a separate signal. The transmission device and the measurement device are in such a case both coupled to a same optical channel, preferably via an optical coupler and/or optical filter.

An even further advanced technique is that of embedded OTDR, in which the transmission device itself contains hardware for generating the optical downstream signal as well as hardware for carrying out an OTDR measurement. Preferably, the amplitude of the optical downstream signal, possessing the downstream wavelength, is directly modulated in dependence on a correlation sequence. The amount of amplitude modulation is preferably chosen, such that it affects the transmitted data signal only to a certain extent.

An optical signal received at the transmission device from the optical channel may then contain at least two signal components: a reflected response signal of the optical channel, due to reflection of the optical downstream signal, possessing the downstream wavelength, and the one or more optical upstream signals sent by the one or more ONUs, possessing the upstream wavelength.

The document WO2010/146659A1 discloses a system for an optical transmission in which a transmitting unit provides downstream signals to an optical interface that is furthermore able to receive a reflected fraction of the downstream signal as well as an upstream signal. For providing the downstream signal from the transmitting unit to the optical interface an optical half mirror is used, which also is used for reflecting the received reflected downstream signal and the upstream signal towards two different reception units, wherein the received signals having different wavelengths are split onto different reception units by means of an optical filter.

### Summary

Proposed is an optical transceiver module for an optical line terminal of an optical access network.

The transceiver module comprises an optical transmission unit, a first and a second optical reception unit, an optical filter, an optical circulator and an optical interface. Preferably, the optical interface is connectible to an optical transmission link.

The optical transmission unit is operable to generate an optical downstream signal. The downstream signal is modulated in dependence on a data signal and a measurement signal. Furthermore, the downstream signal is of a downstream wavelength.

The optical circulator and the optical filter operate in conjunction,
- such that the optical downstream signal is provided from the transmission unit to the optical interface,
- and such that the received optical signal received at the optical interface is received by the optical filter.

The received optical signal contains an optical upstream signal at an upstream wavelength, which is different from the downstream wavelength. Furthermore, the received optical signal contains a reflected signal fraction of the optical downstream signal, which is reflected by the optical transmission link. The reflected signal fraction is thus of the downstream wavelength.

The optical circulator and the optical filter furthermore operate in conjunction,
- such that the optical upstream signal is provided to the first optical reception unit,
- and such that the reflected signal fraction is provided to the second optical reception unit.

In order to grasp the advantages of the proposed solution over the prior art, the following aspects have to be taken into consideration.

When using the circulator and the filter in conjunction for providing the reflected signal fraction to the second optical reception unit, the reflected signal fraction does not have to be split by other devices, such as for example an optical tap coupler, which would split the reflected signal fraction by means of power splitting. Thus, using the circulator allows to provide a maximized amount of the reflected signal fraction's power to the second optical reception unit, in comparison to a solution in which the signal power of the reflected signal fraction is reduced to the tap coupler. Receiving a maximized amount signal power of the reflected signal fraction in turn allows to keep a modulation depth, at which the optical downstream signal is modulated in dependence of the measurement data, below a specific depth level. Keeping the modulation depth for modulating the optical downstream signal in dependence of the measurement signal below a specific depth level in turn allows to minimize an extent, to which the optical downstream signal is affected by the modulation due to the measurement signal. This in turn allows to retain the modulation of the optical downstream signal in dependence of the data signal to a maximized extent, which leads to a minimized number of errors occurring during the data transmission by means of the downstream signal from the transceiver module of the optical line terminal to optical network units, which may be connected directly or indirectly to the optical link.

Furthermore, when using an optical tap coupler, the use of such a tap coupler may cause also a splitting of the optical downstream signal. Since the downstream signal comprises a data signal and a measurement signal, data reception at the optical network units will be sensitive to the amount of measurement signal present within the downstream signal. The measurement signal preferably is present as an additional amplitude modulation performed on the downstream signal. Due to the fact, that the downstream signal is not split in any way before providing it to the optical interface, as described above, this allows the measurement signal to be present up to a certain extent within the downstream signal without affecting data reception at the ONUs too severely. If the downstream signal was split in power by the tap couples, or in other words reduced in power, before providing it to the optical interface for transmitting it into the transmission link towards the ONUs, this would also degrade the presence of the data signal and may even increase the impact of the measurement signal onto data reception via the downstream signal at the ONUs. Due to the fact, that the proposed solution of the transceiver module is one, in which the optical downstream signal is not split for providing it from the transmission unit to the optical interface, the presence of the measurement signal within the downstream signal is allowable to a certain extent.

In other words, in the case, that the downstream signal would be reduced in power by devices within the transceiver module, this in turn would reduce the amount of signal power received at other optical network units and thus also increase the amount of data errors occurring during the data transmission.

Although, such errors may be compensated by means of forward error encoding performed on data transmitted via the downstream signal, this would not be of advantage, since there may be legacy ONUs within the network, which may not be able to decode the received data according to the applied forward error encoding algorithm.

### Brief description of the drawings

Figure 1 shows an optical transceiver module according to the prior art.
Figure 2 shows a proposed transceiver module according to an embodiment.
Figure 3 shows an optical circulator according to an embodiment together with first optical signals.
Figure 4 shows the optical circulator according to the embodiment together with second optical signals.

### Description of embodiments

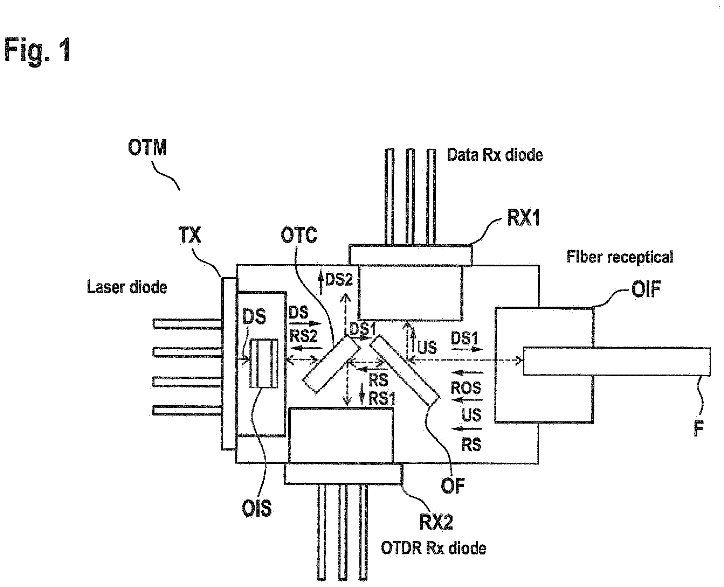

Figure 1 shows an optical transceiver module OTM that contains an optical transmission unit TX, which is preferably a laser transmission unit. Even more preferably, the transmission unit is given in the form of a laser diode.

The transmission unit TX generates a downstream signal DS at a downstream wavelength. Preferably, the downstream signal DS is of a wavelength of 1490 nanometres. The transmission unit TX modulates the signal DS in dependence on a data signal, which is not shown explicitly in Figure 1. Preferably, this modulation is an amplitude modulation.

The downstream signal passes an optical isolator OIS, which allows a passing of the downstream signal DS further on towards an optical tap coupler OTC.

The optical tap coupler OTC is in other words an optically partially transmitting device. The tap coupler OTC splits the downstream signal into two signal fractions DS1, and DS2.

The signal fraction DS1 consists preferably of 90% of the power of the signal DS, while the signal fraction DS2 consists approximately of 10% signal power of the signal DS. Thus, the tap coupler OTC causes a power reduction of the signal fraction DS1 with regard to the signal DS. In other words, the tap coupler OTC receives the signal DS and splits it into two signal fractions DS1 and DS2, which are transmitted by the tap coupler OTC with different respective power fractions in different directions. The reason, why a tap coupler OTC is needed in this configuration will be described in detail later on.

The signal fraction DS1 of the downstream signal DS passes furthermore an optical filter OF, which is preferably a wavelength divisional multiplexing (WDM) filter. The filter OF is of such kind, such that the signal fraction DS1 passes the filter OF towards an optical interface OIF. The interface OIF is connectible to an optical fiber F, which is preferably part of an optical transmission link. The optical fiber F is not to be seen as an integral part of the transceiver module OTM, but is only depicted for illustration purposes here.

A received optical signal ROS is received from the optical fiber F at the optical interface OIF. The received optical signal ROS consists of an optical upstream signal US and a reflected signal fraction RS of the optical downstream signal. The reflected signal fraction RS is the signal fraction, which is reflected by the optical transmission link. The reflected signal fraction RS is of the downstream wavelength, while the upstream signal US is of an upstream wavelength. Preferably, the upstream wavelength is of 1310 nanometres.

The received optical signal ROS reaches the optical filter, which performs wavelength splitting. The filter OF splits the received optical signal ROS, such that the upstream signal US is provided to a first reception unit RX1. The reception unit RX1 is preferably a photodiode.

Furthermore, the reflected signal fraction RS passes through the filter OF and reaches the tap coupler OTC.

The tap coupler OTC splits the received signal fraction RS into two further sub-fractions RS1 and RS2. The sub-fraction RS1 contains for example 10% power of the signal fraction RS, while the sub-fraction RS2 contains 90% of the power of the signal fraction RS. Thus, the tap coupler OTC provides the greater signal sub-fraction RS1 of the signal fraction RS to a second reception unit RX2. The reception unit RX2 is preferably a photodiode.

The tap coupler OTC is necessary in order to direct the signal sub-fraction RS1 to the reception unit RX2. Still, the sub-fraction RS2 passes the tap coupler OTC and reaches the optical isolator OIS, which blocks the sub-fraction RS2 and thus avoids the sub-fraction RS2 to reach the transmission diode TX. The sub-fraction RS1 is of a significantly smaller amount of signal power than the signal sub-fraction RS2. This is due to the fact, that the tap coupler OTC allows greater signal fractions DS1 and RS2 to be transmitted through the tap coupler OTC along the respective transmission directions of the respective incoming signals DS, RS, while the tap-coupler re-directs only smaller signal fractions DS2 and RS1 to be re-directed with regard to the respective transmission directions of the respective incoming signals DS, RS.

Considering the solution of the transceiver module OTM using a tap coupler OTC and the isolator OIS, it is clear, that this solution works properly, in the case that a sufficient amount of the signal fraction RS reaches the reception unit RX2 as the sub-fraction RS1 and in the case that a sufficient signal fraction DS1 of the downstream signal DS is provided from the transmission unit TX to the optical interface OIF.

The transmission unit TX may be controlled by a driving unit, not explicitly shown in Figure 1, such that the downstream signal DS is modulated in dependence on an electrical data signal.

Furthermore, the transmission unit TX may be controlled by the same or another driving unit, such that the downstream signal DS is modulated in dependence on the measurement signal. The measurement signal is preferably a digital electrical signal representing a correlation sequence.

The modulation of the downstream signal DS in dependence on the measurement signal is preferably carried out, by using a correlation sequence, which is a pseudo-random bit sequence. This bit sequence has a pre-defined bit rate, which is preferably a bit rate of 10 megahertz. The bit sequence has preferably a length of 2 to 11 minus 1.

At the reception unit RX1, the received upstream signal US is converted into an electrical signal, which may be then used for deriving received data transmitted by the upstream signal US.

The reception unit RX2 converts the sub-fraction RS1 of the reflected signal fraction RS into an electrical signal, which may then be used for performing OTDR measurement.

The modulation of the downstream signal DS in dependence on the measurement signal is preferably an amplitude modulation. Furthermore, the modulation of the downstream signal DS in dependence on the data is an amplitude modulation at a pre-defined bit rate using on- and off-keying. This on- and off-keying is preferably carried out at a bit rate of 2.5 Gigabits per second.

The amplitude, by which the optical downstream signal DS is modulated in dependence of the measurement signal, is preferably within the range of 5% to 10% of the optical downstream signal's DS maximum amplitude.

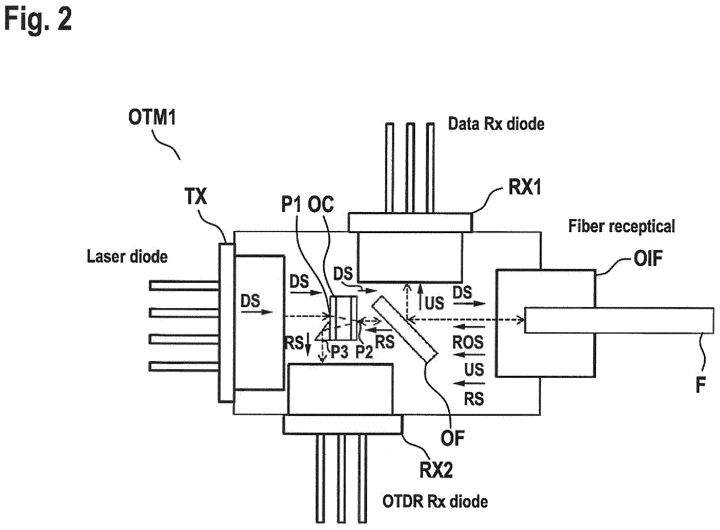

Figure 2 shows a proposed optical transceiver module OTM1 according to a preferred embodiment.

The transceiver module OTM1 contains a transmission unit TX, and reception unit RX1 and RX2, as previously describe with regard to Figure 1.

Furthermore, the transceiver module OTM1 contains also an optical interface OIF, which is connectible to an optical fiber F, as previously described above.

The transmission unit TX generates a downstream signal DS as previously described with regard to Figure 1.

The downstream signal DS is provided from the transmission unit TX to a first port P1 of an optical circulator OC. The circulator OC provides the downstream signal DS from the first port P1 to its second port P2, where the downstream signal DS leaves the circulator OC. The downstream signal DS then reaches an optical filter OF, which is identical to an optical filter OF as previously described with regard to Figure 1.

Furthermore, the downstream signal DS reaches the optical interface OIF.

At the optical interface OIF, a received optical signal ROS consisting of upstream signal US and a reflected signal fraction RS is received from the optical fiber F, as previously described with regard to Figure 1. The optical filter OF provides the upstream signal US to the reception unit RX1. Furthermore, the optical filter provides the reflected signal RS to the optical circulator OC.

The reflected fractional signal RS reaches the circulator OC at the second port P2. The circulator OC provides the received signal fraction RS from the second port P2 to a third port P3, at which the received signal fraction RS leaves the circulator OC and is then provided to the reception unit RX2.

Looking at the solution of the transceiver module OTM 1 given in Figure 2, it has to be noted, that a presence of an optical isolator between the coupler OC and the transmission unit TX is not necessary, since the optical signal coupler OC does not split the received optical signal RS into sub-fractions, of which one sub-fraction may reach the transmission unit TX, as shown as the sub-fraction RS2 depicted in Figure 1. Thus, the use of the circulator OC allows to realize the transceiver module OTM1 without the optical isolator OIS shown in Figure 1.

Furthermore, since the optical circulator OC provides the downstream signal DS from its first port to its second port, the downstream signal DS is not split into signal fractions DS1 and DS2 when using a tap-coupler OTC, as shown in Figure 1. Thus, the downstream signal DS does not experience power loss, as it is the case for the signal fraction DS1 with regard to the downstream signal DS shown in Figure 1 . Therefore, the solution of the proposed transceiver module OTM1 allows to transmit the downstream signal DS from the transmission unit TX to the optical interface OIF with minimized power reduction within the transceiver module OTM1, which in turn maximizes the amount of optical power received by optical network units connected to the optical link, shown here as the optical fiber F. Thus, by maximizing the signal power of the downstream signal DS received at the ONUs, the error rate of the data transmission realized by the downstream signal DS is minimized.

Even furthermore, since the downstream signal DS is provided to the optical network unit ONU with maximized power, this allows to reduce the amount of amplitude modulation performed on the downstream signal DS for inserting the measurement signal into the downstream signal DS. This in turn even more reduces an impact of the presence of the measurement signal onto the data signal present within the downstream signal, which in further turn reduces the error rate of the data transmission by means of the downstream signal DS.

To give an example, when using 10% of the amplitude of the downstream signal for inserting the measurement signal into the downstream signal, this is equivalent to about 2 to 3dB loss of power on the data signal of the downstream signal DS, which is equivalent to a reduced number of several kilometers over which the downstream signal DS may perform data transmission to the ONUs without severe error rate. To give an example, approximately 0.25 dB are equal to 1 kilometer of less transmission distance.

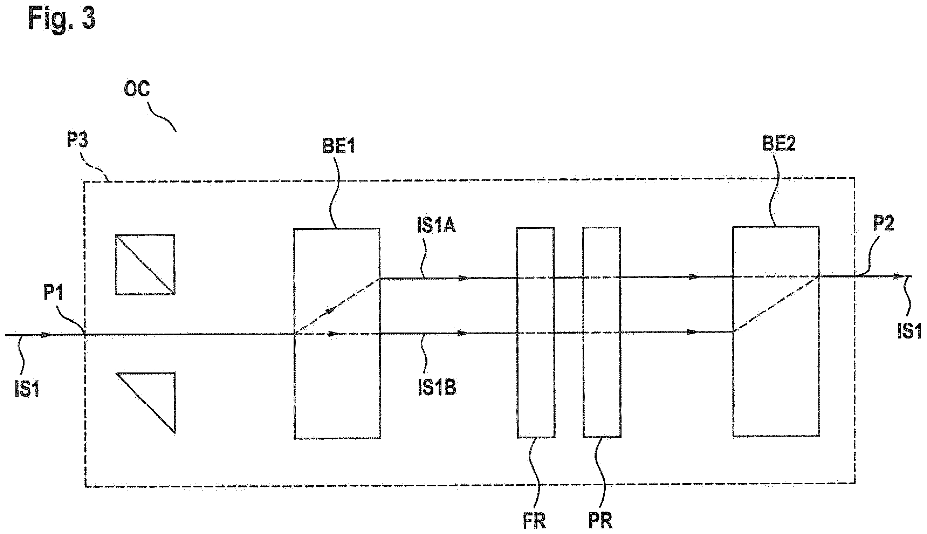

Figure 3 shows an embodiment of an optical circulator. The circulator OC receives at its first port P1 an incoming signal IS1. This signal IS1 is split by a birefringent element BE1 into orthogonally polarized fractions IS1A and IS1B. The fraction IS1B continues along the original path, while the fraction IS1A is displaced upwards. Both fractions IS1A and IS1B reach a non-reciprocal Faraday rotator FR and a phase-retarder PR, which reverse the polarization azimuth of both the fractions IS1A and IS1B. Then, the two fractions IS1A and IS1B reach a second birefringent element BE2, which reverses the displacement of the fractions IS1A and IS1B due to the reversed polarization of these fractions IS1A and IS1B. Thus, the two fractions IS1A and IS1B are combined at the second port P2 for output out of the circulator OC. This circulator OC contains furthermore a reflective prism RP and a polarizing beam splitter cube PBC, which contains the third port P3.

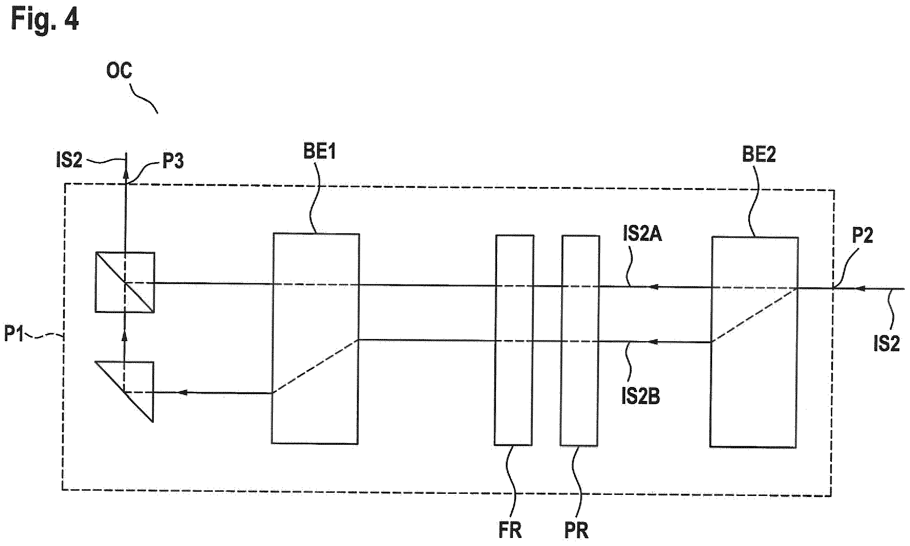

Figure 4 shows the optical circulator OC, in the case that an incoming signal IS2 reaches the optical circulator OC at the second port P2. The signal IS2 is divided by the birefringent element BE2 into two orthogonally polarized fractions IS2A and IS2B. Then, the orthogonally polarized fractions IS2A and IS2B reach the phase-retarder PR and the non-reciprocal Faraday rotator FR. Since the Faraday rotator FR is non-reciprocal, polarizations of the fractions IS2A and IS2B do not change this transmission direction.

Next, the signal fractions IS2A and IS2B reach the birefringent element BE1, which increases the displacement of the signal fractions IS2A and IS2B. The signal fraction IS2A reaches the polarizing beam splitter cube PBC, from where it is directed towards the output port, which is the port P3. Furthermore, from the birefringent element BE1, the signal fraction IS2B reaches a reflector prism PR, from where the signal fraction IS2B also is directed via the polarizing beam splitter cube PBC towards the third port P3.

## Claims

1. Optical transceiver module for an optical line terminal of an optical access network, comprising,
- an optical transmission unit (TX),
- a first and a second optical reception unit (RX1, RX2),
- an optical filter (OF),
- an optical circulator(OC), and
- an optical interface (OIF), connectable to an optical transmission link,
wherein said optical transmission unit (TX) is operable to modulate an optical downstream signal (DS), possessing a downstream wavelength, in dependence on a data signal and a measurement signal,
wherein said optical circulator (OC) and said optical filter (OF) are operable in conjunction,
- to provide said optical downstream signal (DS) from said optical transmission unit (TX) to said optical interface (OIF),
- to receive a received optical signal (ROS) from said optical interface (OIF), wherein said received optical signal (ROS) comprises an optical upstream signal (US) at an upstream wavelength, different from said downstream wavelength, and a reflected signal fraction (RS) of said optical downstream signal DS at said downstream wavelength,
- to provide said optical upstream signal (US) to said first optical reception unit (RX1),
- and to provide said reflected signal fraction (RS) to said second optical reception unit (RX2), and wherein said optical circulator (OC) is operable to receive said optical downstream signal (DS) from said optical transmission unit (TX) and to provide said optical downstream signal (DS) to said optical filter (OF), wherein said optical filter (OF) is operable
- to provide said optical downstream signal (DS) to said optical interface (OIF),
- to receive said reflected signal fraction (RS) from said optical interface (OIF),
- to provide said optical upstream signal (US) to said first optical reception unit (RX1),
- and to provide said reflected signal fraction (RS) to said optical circulator (OC),
and wherein said optical circulator (OC) is furthermore operable to provide said reflected signal fraction (RS) to said second optical reception unit (RX2) and wherein said optical filter (OF) is an optical wavelength divison multiplexing filter, WDM, filter.

2. Optical transceiver module according to claim 1, wherein said optical WDM filter (OF) performs wavelength splitting.

3. Optical transceiver module according to claim 1, comprising furthermore a driving unit,
wherein said driving unit controls said transmission unit (TX) for modulating said optical downstream signal (DS) in dependence on said data signal and said measurement signal.

4. Optical transceiver module according to claim 1, wherein said optical transmission unit (TX) is operable to modulate said optical downstream signal (DS) in dependence on said data signal using amplitude modulation.

5. Optical transceiver module according to claim 4, wherein said amplitude modulation is an on-off-keying modulation.

6. Optical transceiver module according to claim 1, wherein said optical transmission unit (TX) is operable to modulate said optical downstream signal (DS) in dependence on said measurement signal using amplitude modulation.

7. Optical transceiver module according to claim 6, wherein said measurement signal is a correlation sequence.

## Patentansprüche

1. Optisches Transceiver-Modul für ein optisches Leitungsendgerät eines optischen Zugangsnetzwerks, umfassend
- eine optische Übertragungseinheit (TX),
- eine erste und eine zweite optische Empfangseinheit (RX1, RX2),
- einen optischen Filter (OF),
- einen optischen Zirkulator (OC) und
- eine optische Schnittstelle (OIF), die an eine optische Übertragungsverbindung angeschlossen werden kann,
wobei die besagte optische Übertragungseinheit (TX) betrieben werden kann, um ein optisches Abwärtssignal (DS) zu modulieren, das eine Abwärtswellenlänge besitzt, in Abhängigkeit von einem Datensignal und einem Messsignal,
wobei der besagte optische Zirkulator (OC) und der besagte optische Filter (OF) zusammen betrieben werden können,
- um das besagte optische Abwärtssignal (DS) von der besagten optischen Übertragungseinheit (TX) an die besagte optische Schnittstelle (OIF) zu liefern,
- um ein empfangenes optisches Signal (ROS) von der besagten optischen Schnittstelle (OIF) zu empfangen, wobei das besagte empfangene optische Signal (ROS) ein optisches Aufwärtssignal (US) mit einer Aufwärtswellenlänge umfasst, die sich von der besagten Abwärtswellenlänge unterscheidet, und einen reflektierten Signalanteil (RS) des besagten optischen Abwärtssignals DS mit der besagten Abwärtswellenlänge,
- um das besagte optische Aufwärtssignal (US) an die besagte erste optische Empfangseinheit (RX1) zu liefern,
- und um den besagten reflektierten Signalanteil (RS) an die besagte zweite optische Empfangseinheit (RX2) zu liefern,
und wobei der besagte optische Zirkulator (OC) betrieben werden kann, um das besagte optische Abwärtssignal (DS) von der besagten optischen Übertragungseinheit (TX) zu empfangen und um das besagte optische Abwärtssignal (DS) an den besagten optischen Filter (OF) zu liefern, wobei der besagte optische Filter (OF) betrieben werden kann,
- um das besagte optische Abwärtssignal (DS) an die besagte optische Schnittstelle (OIF) zu liefern,
- um den besagten reflektierten Signalanteil (RS) von der besagten optischen Schnittstelle (OIF) zu empfangen,
- um das besagte optische Aufwärtssignal (US) an die besagte erste optische Empfangseinheit (RX1) zu liefern,
- und um den besagten reflektierten Signalanteil (RS) an den besagten optischen Zirkulator (OC) zu liefern,
und wobei der besagte optische Zirkulator (OC) weiterhin betrieben werden kann, um den besagten reflektierten Signalanteil (RS) an die besagte zweite optische Empfangseinheit (RX2) zu liefern, und wobei der besagte optische Filter (OF) ein optischer Wellenlängenmultiplexfilter, WDM-Filter, ist.

2. Optisches Transceiver-Modul nach Anspruch 1, wobei der besagte optische WDM-Filter (OF) eine Wellenlängenaufteilung durchführt.

3. Optisches Transceiver-Modul nach Anspruch 1, weiterhin umfassend eine Antriebseinheit, wobei die besagte Antriebseinheit die besagte Übertragungseinheit (TX) steuert, um das besagte optische Abwärtssignal (DS) in Abhängigkeit von dem besagten Datensignal und dem besagten Messsignal zu modulieren.

4. Optisches Transceiver-Modul nach Anspruch 1, wobei die besagte optische Übertragungseinheit (TX) betrieben werden kann, um das besagte optische Abwärtssignal (DS) in Abhängigkeit von dem besagten Datensignal unter Verwendung von Amplitudenmodulation zu modulieren.

5. Optisches Transceiver-Modul nach Anspruch 4, wobei die besagte Amplitudenmodulation eine On-Off-Umtastung-Modulation ist.

6. Optisches Transceiver-Modul nach Anspruch 1, wobei die besagte optische Übertragungseinheit (TX) betrieben werden kann, um das besagte optische Abwärtssignal (DS) in Abhängigkeit von dem besagten Messsignal unter Verwendung von Amplitudenmodulation zu modulieren.

7. Optisches Transceiver-Modul nach Anspruch 6, wobei das besagte Messsignal eine Korrelationsfolge ist.

## Revendications

1. Module émetteur-récepteur optique pour un terminal de ligne optique d'un réseau d'accès optique, comprenant,
- une unité de transmission optique (TX),
- une première et une seconde unité de réception optique (RX1, RX2),
- une fibre optique (OF),
- un circulateur optique (OC), et
- une interface optique (OIF), connectable à une liaison de transmission optique,
dans lequel ladite unité de transmission optique (TX) est opérable pour moduler un signal optique d'aval (DS), possédant une longueur d'onde d'aval, en fonction d'un signal de données et d'un signal de mesure,
dans lequel ledit circulateur optique (OC) et ladite fibre optique (OF) sont opérables conjointement,
- pour fournir ledit signal optique d'aval (DS) à partir de ladite unité de transmission optique (TX) vers ladite interface optique (OIF),
- pour recevoir un signal optique reçu (ROS) à partir de ladite interface optique (OIF), dans lequel ledit signal optique reçu (ROS) comprend un signal optique d'amont (US) à une longueur d'onde d'amont, différente de ladite longueur d'onde d'aval, et une fraction de signal réfléchi (RS) dudit signal optique d'aval DS à ladite longueur d'onde d'aval,
- pour fournir ledit signal optique d'amont (US) à ladite première unité de réception optique (RX1),
- et pour fournir ladite fraction de signal réfléchi (RS) à ladite seconde unité de réception optique (RX2),
et dans lequel ledit circulateur optique (OC) est opérable pour recevoir ledit signal optique d'aval (DS) à partir de ladite unité de transmission optique (TX) et pour fournir ledit signal optique d'aval (DS) à ladite fibre optique (OF), dans lequel ladite fibre optique (OF) est opérable
- pour fournir ledit signal optique d'aval (DS) à ladite interface optique (OIF),
- pour recevoir ladite fraction de signal réfléchi (RS) à partir de ladite interface optique (OIF),
- pour fournir ledit signal optique d'amont (US) à ladite première unité de réception optique (RX1),
- et pour fournir ladite fraction de signal réfléchi (RS) audit circulateur optique (OC),
et dans lequel ledit circulateur optique (OC) est en outre opérable pour fournir ladite fraction de signal réfléchi (RS) à ladite seconde unité de réception optique (RX2) et dans lequel ladite fibre optique (OF) est un filtre de multiplexage par répartition en longueur d'onde, WDM.

2. Module émetteur-récepteur optique selon la revendication 1,
dans lequel ledit filtre WDM optique (OF) effectue une division de longueur d'onde.

3. Module émetteur-récepteur optique selon la revendication 1, comprenant en outre une unité d'entraînement, dans lequel ladite unité d'entraînement commande ladite unité de transmission (TX) pour une modulation dudit signal optique d'aval (DS) en fonction dudit signal de données et dudit signal de mesure.

4. Module émetteur-récepteur optique selon la revendication 1, dans lequel ladite unité de transmission optique (TX) est opérable pour moduler ledit signal optique d'aval (DS) en fonction dudit signal de données en utilisant une modulation d'amplitude.

5. Module émetteur-récepteur optique selon la revendication 4, dans lequel ladite modulation d'amplitude est une modulation marche-arrêt.

6. Module émetteur-récepteur optique selon la revendication 1, dans lequel ladite unité de transmission optique (TX) est opérable pour moduler ledit signal optique d'aval (DS) en fonction dudit signal de mesure en utilisant une modulation d'amplitude.

7. Module émetteur-récepteur optique selon la revendication 6, dans lequel ledit signal de mesure est séquence de corrélation.
